# EUROPÄISCHE PATENTSCHRIFT

(11) **EP 3 782 467 B1**
(45) Veröffentlichungstag und Bekanntmachung des Hinweises auf die Patenterteilung: **06.07.2022**
(21) Anmeldenummer: 20186403.0
(22) Anmeldetag: 17.07.2020
(51) Int. Cl.: A01M 7/00

(54) **VERFAHREN ZUM IDENTIFIZIEREN VON BEIKRÄUTERN INNERHALB EINER DEFINIERTEN PFLANZENREIHE EINER LANDWIRTSCHAFTLICHEN FLÄCHE**
METHOD FOR IDENTIFYING WEEDS WITHIN A DEFINED ROW OF PLANTS OF AN AGRICULTURAL AREA
PROCÉDÉ D'IDENTIFICATION DES MAUVAISES HERBES DANS UN RANG DÉFINI DE PLANTES D'UNE SURFACE AGRICOLE

(30) Priorität: 02.08.2019 DE 102019211642
(43) Veröffentlichungstag der Anmeldung: 24.02.2021
(73) Patentinhaber: Robert Bosch GmbH, 70442 Stuttgart (DE)
(72) Erfinder: Khani, Farid, 70599 Stuttgart (DE)

(56) Entgegenhaltungen:
- DE-A1- 19 530 356
- DE-A1-102017 210 804

## Beschreibung

### Stand der Technik

Die Erfindung geht aus von einem Verfahren zum Identifizieren von Beikräutern innerhalb einer definierten Pflanzenreihe einer landwirtschaftlichen Fläche sowie einer Klassifizierungseinheit und einer landwirtschaftlichen Arbeitsmaschine mit einem landwirtschaftlichen Arbeitswerkzeug und einer Pflanzenklassifizierungseinheit nach Gattung der unabhängigen Ansprüche. Gegenstand der vorliegenden Erfindung ist auch eine Recheneinheit und ein Computerprogramm.

DE 10 2017 210804 und DE 195 30 356 zeigen ein Verfahren zum Identifizieren von Beikräutern.

Aktuelle Algorithmen zur Pflanzenklassifizierung basieren häufig auf Neuronale-Netzte ("Deep-Learning") und verwenden große Bilddatenbanken die mühsam aufgebaut und gepflegt werden müssen. Algorithmen für Pflanzenerkennung sind aus der Literatur ausreichend bekannt, bspw. "Hernández-Serna A, Jimenez-Segura LF. 2014. Automatic identification of species with neural networks". Solche "Deep-Learning" Verfahren sind bei hohen Bildauflösungen sehr Rechenintensiv und benötigen viele Bilddaten um trainiert zu werden.

### Offenbarung der Erfindung

Gegenstand der vorliegenden Erfindung ist ein Verfahren zum Identifizieren von Beikräutern innerhalb einer definierten Pflanzenreihe einer landwirtschaftlichen Fläche, mit den Schritten:
- Empfangen einer Bildinformation von einem mittels einer optischen Erfassungseinheit erfassten Feldabschnitt einer landwirtschaftlichen Fläche mit Pflanzen;
- Identifizieren von zumindest einer Pflanzenreihe in der Bildinformation mittels einer Recheneinheit;
- Definieren eines die zumindest eine identifizierte Pflanzenreihe umfassenden Kulturpflanzenbereiches unter Verwendung der zumindest einen identifizierten Pflanzenreihe und eines von dem Kulturpflanzenbereich verschiedenen Beikrautbereiches in der Bildinformation mittels der Recheneinheit;
- Ermitteln von Merkmalswerten für Pflanzenmerkmale von Pflanzen des Beikrautbereiches in der Bildinformation mittels der Recheneinheit, um einen charakteristischen Merkmalswertebereich von Pflanzen des Beikrautbereiches zu erhalten;
- Ermitteln von Merkmalswerten für die gleichen Pflanzenmerkmale von Pflanzen des Kulturpflanzenbereiches in der Bildinformation mittels der Recheneinheit; und
- Identifizieren der Pflanzen des Kulturpflanzenbereiches mit Merkmalswerten, welche in den erhaltenen charakteristischen Merkmalswertebereich von Pflanzen des Beikrautbereiches fallen, um Beikräuter innerhalb einer definierten Pflanzenreihe zu identifizieren.

Gegenstand der vorliegenden Erfindung ist ferner eine Recheneinheit, welche eingerichtet ist, die Schritte eines vorangehend beschriebenen Verfahrens durchzuführen und/oder zu steuern. Gegenstand der vorliegenden Erfindung ist auch ein Computerprogramm, das dazu eingerichtet ist, die Schritte eines vorangehend beschriebenen Verfahrens durchzuführen und/oder zu steuern sowie ein maschinenlesbares Speichermedium, auf dem das Computerprogramm gespeichert ist.

Gegenstand der vorliegenden Erfindung sind außerdem eine Pflanzenidentifizierungseinheit mit einer optischen Erfassungseinheit zum Erfassen eines Feldabschnitts einer landwirtschaftlichen Fläche mit Pflanzen, um eine Bildinformation von dem erfassten Feldabschnitt zu erhalten, und einer vorangehend beschriebenen Recheneinheit.

Gegenstand der vorliegenden Erfindung ist des Weiteren eine landwirtschaftliche Arbeitsmaschine mit einem landwirtschaftlichen Arbeitswerkzeug und einer vorangehend beschriebenen Pflanzenidentifizierungseinheit, wobei das Arbeitswerkzeug in Abhängigkeit von den identifizierten Pflanzen des Kulturpflanzenbereiches mit Merkmalswerten, welche in den erhaltenen charakteristischen Merkmalswertebereich von Pflanzen des Beikrautbereiches fallen, angesteuert wird.

Unter einer landwirtschaftlichen Fläche kann eine landwirtschaftlich genutzte Fläche, eine Anbaufläche für Pflanzen oder auch eine Parzelle einer solchen Fläche bzw. Anbaufläche verstanden werden. Die landwirtschaftliche Fläche kann somit eine Ackerfläche, ein Grünland oder eine Weide sein. Die Pflanzen umfassen Kulturpflanzen bzw. Nutzpflanzen, deren Frucht landwirtschaftlich genutzt wird, beispielsweise als Nahrungsmittel, Futtermittel oder als Energiepflanze, sowie Beikräuter bzw. Unkräuter.

Der Feldabschnitt kann ein Erfassungsabschnitt bzw. ein erfasster Bildabschnitt einer optischen Erfassungseinheit sein. Die Bildinformation kann bspw. ein Bild des erfassten Feldabschnitts sein. Unter einer optischen Erfassungseinheit kann beispielsweise eine Kamera oder eine 3D-Kamera oder eine Infrarot-Erfassungseinheit verstanden werden. Die optische Erfassungseinheit kann kalibriert sein, um z. B. die Höhenzuordnung aus erfassten Bilder zu errechnen.

Das Verfahren kann einen Schritt des Erfassens eines Feldabschnitts einer landwirtschaftlichen Fläche mit Pflanzen mittels der optischen Erfassungseinheit umfassen. Der Schritt des Erfassens kann während einer Überfahrt oder eines Fluges der Pflanzenidentifizierungseinheit durchgeführt werden. Zumindest ein weiterer Schritt des Verfahrens, insbesondere alle Schritt des Verfahrens kann/können während einer Überfahrt oder eines Fluges der Pflanzenidentifizierungseinheit durchgeführt werden

Hierbei kann die Pflanzenidentifizierungseinheit eine mobile Einheit umfassen oder auf einer mobilen Einheit angeordnet sein, wobei die mobile Einheit insbesondere als Landfahrzeug und/oder Luftfahrzeug und/oder Anhänger ausgebildet sein kann. Die mobile Einheit kann auch ein selbstfahrender bzw. autonomer Roboter sein. Die Pflanzenidentifizierungseinheit ist bevorzugt eine Pflanzenklassifizierungseinheit zum Klassifizieren von Pflanzen.

Die landwirtschaftliche Arbeitsmaschine ist bevorzugt eine Unkrautregulierungsmaschine. Das landwirtschaftliche Arbeitswerkzeug ist bevorzugt ein mechanisches Werkzeug und/oder eine Spritzvorrichtung zur Unkrautregulierung.

Das Verfahren umfasst einen Schritt des Identifizierens von zumindest einer Pflanzenreihe bzw. einer Kulturpflanzenreihe in der Bildinformation des erfassten Feldabschnitts mittels der Recheneinheit. Das Identifizieren der zumindest einen Pflanzenreihe erfolgt bevorzugt unter Verwendung zumindest einer der folgenden Informationen: Farbanteil, insbesondere roter Farbanteil von Pflanzen des erfassten Feldabschnitts, Infrarotanteil von Pflanzen des erfassten Feldabschnitts, Pflanzenabstand, Pflanzreihenabstand, Wachstumsstadium der Pflanzen, Geokoordinaten einer Aussaat der Pflanzen. Mittels dieser Informationen können die Pflanzenreihen auf einfache Art und Weise identifiziert werden, da bspw. Kulturpflanzen in der Regel äquidistant angepflanzt werden oder die Kulturpflanzen vom Wachstumsstadium weiter sind als die Beikräuter bzw. Unkräuter. Bevorzugt werden in dem Schritt des Identifizierens der zumindest einen Pflanzenreihe alle Pflanzenreihen in der Bildinformation bzw. in dem erfassten Feldabschnitt identifiziert. Da sich die Pflanzenreihen im Wesentlichen geradlinig erstrecken, kann die Identifizierung einer Pflanzenreihe beispielsweise durch Einpassung einer Geraden bzw. einer geradlinigen Pflanzenreihenmittelpunktlinie in eine Bildtrajektorie mit einem berechneten NDVI-Index (Normierter Abstand zwischen Rot und Infrarot) erfolgen.

Der Schritt des Identifizierens von zumindest einer Pflanzenreihe umfasst verständlicherweise das Erfassen von Pflanzen in der Bildinformation bzw. in dem erfassten Feldabschnitt. Unter einem Erfassen von Pflanzen kann beispielsweise das Bestimmen des Vorhandenseins von Pflanzen in dem Feldabschnitt verstanden werden, insbesondere ohne dass dabei eine Klassifizierung der einzelnen Pflanzen erfolgt. Der Schritt des Erfassens von Pflanzen kann ein Erfassen eines Farbanteils, insbesondere eines roten Farbanteils und/oder eines Infrarotanteils in dem Feldabschnitt bzw. Bildabschnitt umfassen. Hierbei können mittels der optischen Erfassungseinheit, bspw. anhand eines vorbestimmten NDVI-Wertes (Normalized Differenced Vegetation Index, er wird aus Reflexionswerten im nahen infraroten und sichtbaren roten Wellenlängenbereich des Lichtspektrums gebildet) Pflanzen erfasst werden, indem Biomasse vom (Erd-)Boden unterschieden wird.

Das Verfahren umfasst ferner einen Schritt des Definierens eines die zumindest eine identifizierte Pflanzenreihe umfassenden Kulturpflanzenbereiches unter Verwendung der zumindest einen identifizierten Pflanzenreihe mittels der Recheneinheit. Hierbei werden zunächst per Definition alle Pflanzen in dem Kulturpflanzenbereich als Objekte derselben Klasse angesehen bzw. derselben Klasse zugeordnet, bspw. der Klasse "Kulturpflanzen". Der Kulturpflanzenbereich wird bevorzugt unter Verwendung von Nachbarschaftspixeln von erfassten Pflanzen des Kulturpflanzenbereiches definiert. Hierbei wird der Kulturpflanzenbereich bevorzugt um eine erzeugte Pflanzenreihenmittelpunktlinie definiert, insbesondere wobei sich die erzeugte Pflanzenreihenmittelpunktlinie im Wesentlichen geradlinig erstreckt. Der Kulturpflanzenbereich kann die Pflanzen der Pflanzenreihe vollständig umfassen. Der Kulturpflanzenbereich kann jedoch auch die Pflanzenreihe umfassen, ohne dass die einzelnen Pflanzen der Pflanzenreihe vollständig umfasst sind. Demnach kann der Kulturpflanzenbereich die einzelnen Pflanzen der Pflanzenreihe auch nur teilweise umfassen. Der Kulturpflanzenbereich kann jedoch auch die Pflanzenreihenmittelpunktlinie selbst sein. Der Kulturpflanzenbereich kann um die jeweilige Pflanzenreihenmittelpunktlinie mit einer konstanten bzw. definierten Breite definiert werden. Der Kulturpflanzenbereich kann jedoch auch eine variable Breite aufweisen, wobei die Breite von einem Wachstumsstadium einer in einem entsprechenden Bereich angeordneten Pflanze des Kulturpflanzenbereiches abhängen kann.

Eine solche Ausführungsform des hier vorgeschlagenen Ansatzes bietet den zusätzlichen Vorteil, dass das unterschiedliche Breitenwachstum der Kulturpflanzen in dem Kulturpflanzenbereich mitberücksichtigt wird. Hierdurch wird insbesondere verhindert, dass Teile der Kulturpflanze, welche in den Beikrautbereich ragen, nicht als Beikraut gewertet werden. Dazu wird anhand des Wachstumsstadiums der Kulturpflanze ein Schlauch um den eigentlichen Pflanzreihenmittelpunkt definiert werden. Pflanzenteile/-pixel welche direkt an einem Pflanzenpixel aus dem Kulturpflanzenbereich grenzen, werden dann ebenfalls als Kulturpflanze bewertet (Nachbarschaftspixel).

Das Verfahren umfasst außerdem einen Schritt des Definierens eines von dem Kulturpflanzenbereich verschiedenen Beikrautbereiches in der Bildinformation des erfassten Feldabschnitts mittels der Recheneinheit. Hierbei werden per Definition alle Pflanzen in dem Beikrautbereich als Objekte derselben Klasse angesehen bzw. derselben Klasse zugeordnet, bspw. der Klasse "Beikräuter". Der Beikrautbereich weist bevorzugt keine Überlappung zu dem Kulturpflanzenbereich auf. Der Beikrautbereich erstreckt sich bevorzugt zwischen dem Kulturpflanzenbereich bzw. den Kulturpflanzenbereichen. Der Beikrautbereich kann ein Restbereich des Feldabschnitts sein, welcher sich nach der Definition des Kulturpflanzenbereiches bzw. der Kulturpflanzenbereiche ergibt. Der Beikrautbereich kann jedoch auch einen definierten Abstand zu dem Kulturpflanzenbereich bzw. den Kulturpflanzenbereichen aufweisen.

Das Verfahren umfasst des Weiteren einen Schritt des Ermittelns von Merkmalswerten für Pflanzenmerkmale von Pflanzen des Beikrautbereiches in der Bildinformation mittels der Recheneinheit, um einen charakteristischen Merkmalswertebereich von Pflanzen des Beikrautbereiches zu erhalten. Hierbei wird jeweils ein Merkmalswert je Pflanzenmerkmal und je Pflanze ermittelt. Die Merkmalwerte jeder Pflanze bilden einen Merkmalsvektor aus. Demnach erhält man für jede Pflanze einen Merkmalsvektor mit so vielen Einträgen, wie Pflanzenmerkmale betrachtet werden. Jeder dieser Merkmalsvektoren bezeichnet einen Punkt im Merkmalsraum. Der Merkmalsraum hat also so viele Dimensionen wie Pflanzenmerkmale betrachtet werden. Die Punkte wiederum in dem Merkmalsraum bilden einen charakteristischen Merkmalswertebereich bzw. ein Cluster/eine Klasse von Pflanzen des Beikrautbereiches aus. Hierbei werden bevorzugt die Merkmalwerte von mindestens zwei Pflanzenmerkmale, bevorzugt von einer Vielzahl von Pflanzenmerkmalen ermittelt. Die Pflanzenmerkmale sind bevorzugt Merkmale, in denen sich die Pflanzen bzw. Beikräuter des Baukrautbereiches von den Pflanzen bzw. Kulturpflanzen des Kulturpflanzenbereiches stark unterscheiden. Die Pflanzenmerkmale können insbesondere geometrische Merkmale der Pflanzen sein. Die Pflanzenmerkmale können bspw. ausgewählt sein aus der Gruppe bestehend aus: Wölbung, Schiefe, Schwerpunkt, Fläche, Rundheit, Kompaktheit, Konvexität. Die Merkmalwerte können unter Verwendung invarianter Momente ermittelt werden. Diese Merkmale bzw. Momente sind eine statistische Beschreibung der einzelnen Objekte bzw. Pflanzen in der Bildinformation. Hierbei werden bevorzugt die Merkmalswerte für Pflanzenmerkmale mit der größten Trennschärfe ermittelt. Somit erfolgt die Auswahl der Pflanzenmerkmale u.a. in Abhängigkeit von der Trennschärfe.

D.h., mit anderen Worten, dass eine Merkmalsextraktion für die Pflanzen in dem Beikrautbereich (welche per Definition bspw. als "Beikräuter" angesehen werden) durchgeführt wird, wobei durch eine (geeignete) Kombination bzw. Auswahl von Pflanzenmerkmalen ein Merkmalsraum aufgespannt wird, in dem die Punkte zu einem charakteristischen Merkmalswertebereich bzw. einem Cluster/einer Klasse zusammengefasst werden. Die Auswahl der Pflanzenmerkmale kann bspw. durch zwei Verfahren ermittelt werden:
- manuell, insbesondere durch Auswertung von Testdaten und Statistiken oder
- mittels eines Algorithmus, welcher ausgebildet ist, alle Formmerkmale zu berechnen und selbständig die beste Trennschärfe bei variabler Zusammensetzung von Formmerkmalen zu ermitteln.

Das Verfahren umfasst ferner einen Schritt des Ermittelns von Merkmalswerten für die gleichen Pflanzenmerkmale von Pflanzen des Kulturpflanzenbereiches in der Bildinformation mittels der Recheneinheit. Hierbei wird analog zu dem vorangehend erläuterten Schritt jeweils ein Merkmalswert je Pflanzenmerkmal und je Pflanze ermittelt. D.h., mit anderen Worten, dass auch für die Pflanzen des Kulturpflanzenbereiches (welche zunächst per Definition bspw. als "Kulturpflanzen" angesehen werden) eine Merkmalsextraktion durchgeführt wird, wobei die zuvor beschriebenen Merkmalswerte je Pflanzenmerkmal und je Pflanze berechnet werden.

Das Verfahren umfasst außerdem einen Schritt des Identifizierens der Pflanzen des Kulturpflanzenbereiches mit Merkmalswerten, welche den erhaltenen charakteristischen Merkmalswertebereich von Pflanzen des Beikrautbereiches fallen, um Beikräuter innerhalb einer definierten Pflanzenreihe bzw. eines definierten Kulturpflanzenbereiches zu identifizieren. D.h., mit anderen Worten, dass Pflanzen in dem Kulturpflanzenbereich identifiziert werden, deren Punkte sich im Merkmalsraum in dem charakteristischen Merkmalswertebereich bzw. dem Cluster/der Klasse von Pflanzen des Beikrautbereiches befinden und somit Merkmalswerte von Pflanzen des Beikrautbereiches, d.h. von Beikräutern aufweisen. Demnach werden alle identifizierten Pflanzen in dem Kulturpflanzenbereich, welche zunächst auch per Definition bspw. als "Kulturpflanzen" angesehen wurden, nun als Beikräuter identifiziert.

Die Recheneinheit ist ausgebildet Signale und/oder Date zu verarbeiten. Die Recheneinheit kann zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Durch das erfindungsgemäße Verfahren ist es nunmehr möglich, auf sehr einfache und ressourcensparende Art und Weise Beikräuter innerhalb einer Pflanzenreihe bzw. Kulturpflanzenreihe zu identifizieren, ohne dass dabei eine Bilddatenbank oder dergleichen benötigt wird. Das Verfahren ist demnach sehr flexibel einsetzbar, da es sich die Pflanzenmerkmale der tatsächlich auf der landwirtschaftlichen Fläche befindlichen Beikräuter zunutze macht und genau diese extrahiert, um Beikräuter in den Pflanzenreihen zu identifizieren.

Hierdurch wird eine Reihe von Vorteilen geboten. Da im Verfahren ein automatisiertes Extrahieren der benötigten Pflanzenmerkmale anhand der aktuell aufgenommenen Bilder erfolgt, kann mit dem Verfahren sehr einfach eine Klassifizierung der identifizierten bzw. aller erfassten Pflanzen erfolgen. Insbesondere können fehlklassifizierte Beikräuter innerhalb von Pflanzenreihen identifiziert und richtig klassifiziert werden. Demnach umfasst das Verfahren bevorzugt außerdem einen Schritt des Klassifizierens der identifizierten Pflanzen des Kulturpflanzenbereiches mit Merkmalswerten, welche in den erhaltenen charakteristischen Merkmalswertebereich von Pflanzen des Beikrautbereiches fallen, in eine erste Pflanzenklasse, insbesondere eine Beikrautklasse. Hierbei werden bevorzugt im Schritt des Klassifizierens ferner alle Pflanzen des Beikrautbereiches ebenfalls in die erste Pflanzenklasse, insbesondere die Beikrautklasse klassifiziert. Alternativ oder zusätzlich werden bevorzugt im Schritt des Klassifizierens alle restlichen Pflanzen des Kulturpflanzenbereiches, d.h. alle Pflanzen abzüglich der Pflanzen mit Merkmalswerten, welche in den erhaltenen charakteristischen Merkmalswertebereich von Pflanzen des Beikrautbereiches fallen und als Beikräuter identifiziert bzw. klassifiziert wurden, in eine von der ersten Pflanzenklasse verschiedene zweite Pflanzenklasse, insbesondere eine Kulturpflanzenklasse klassifiziert.

Ferner kann durch die identifizierten Pflanzen bzw. Beikräuter in dem Kulturpflanzenbereich die Information für darauffolgende Schritte genutzt werden, um Pflanzenreihen besser bzw. genauer zu identifizieren, da die identifizierten bzw. erkannten Beikräuter hierfür unberücksichtigt bleiben bzw. "ignoriert" werden können. Demnach erfolgt bevorzugt das Identifizieren der zumindest einen Pflanzenreihe unter Berücksichtigung zuvor identifizierter Pflanzen des Kulturpflanzenbereiches mit Merkmalswerten, welche in den erhaltenen charakteristischen Merkmalswertebereich von Pflanzen des Beikrautbereiches fallen.

Des Weiteren ermöglich das Verfahren, gezielt Beikräuter in den Pflanzenreihen zu bekämpfen bzw. zu regulieren. Demnach umfasst das Verfahren bevorzugt einen Schritt des Ansteuerns einer landwirtschaftlichen Arbeitsmaschine, insbesondere eines landwirtschaftlichen Arbeitswerkzeugs einer landwirtschaftlichen Arbeitsmaschine, in Abhängigkeit von den identifizierten Pflanzen des Kulturpflanzenbereiches mit Merkmalswerten, welche in den erhaltenen charakteristischen Merkmalswertebereich von Pflanzen des Beikrautbereiches fallen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
- Fig. 1: eine Bildinformation bzw. ein Bild eines erfassten Feldabschnitts;
- Fig. 2: eine schematische Darstellung eines zweidimensionalen Merkmalsraums mit dem charakteristischen Merkmalswertebereich;
- Fig. 3: eine schematische Darstellung des zweidimensionalen Merkmalsraums aus Fig. 2 mit zusätzlichen Punkten von Pflanzen des Kulturpflanzenbereiches;
- Fig. 4: die Bildinformation bzw. das Bild aus Fig. 1 mit einer Neuklassifizierung der identifizierten Pflanzen in dem Kulturpflanzenbereich; und
- Fig. 5: ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

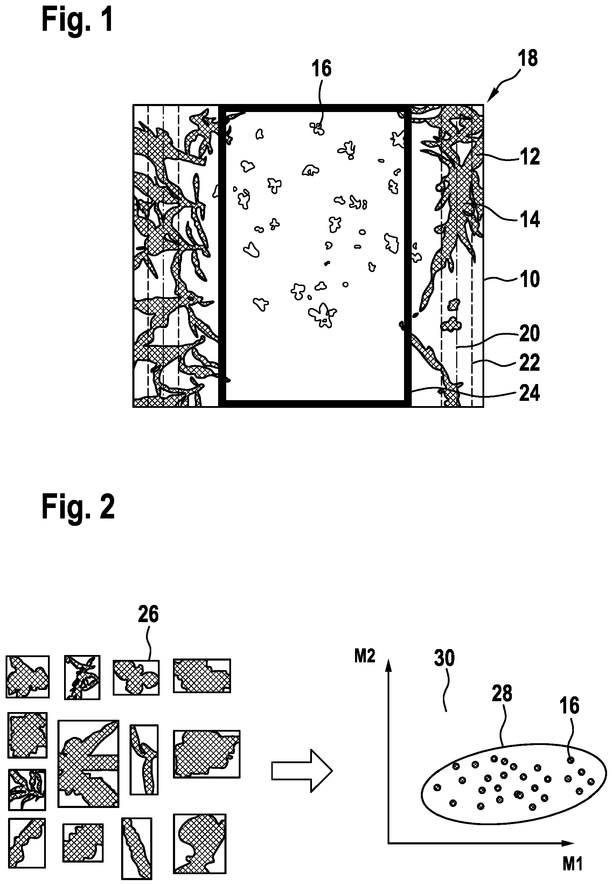

Fig. 1 zeigt eine Bildinformation bzw. ein Bild eines mittels einer (nicht gezeigten) optischen Erfassungseinheit bzw. Kamera erfassten Feldabschnitts 10 einer landwirtschaftlichen Fläche mit Pflanzen 12. Wie nachfolgend näher erläutert wird, umfassen die Pflanzen 12 eine Gruppe bzw. Klasse von Pflanzen 14 bzw. Kulturpflanzen 14 und eine Gruppe bzw. Klasse von Pflanzen 16 bzw. Beikräutern 16.

Wie aus Fig. 1 ersichtlich, wurden nach dem Erfassen der Pflanzen 12 (unter Verwendung des roten Farbanteils und/oder Infrarotanteils und einer Pflanzenabstandsinformation) in dem Feldabschnitt 10 Pflanzenreihen 18 mittels einer (nicht gezeigten) Recheneinheit identifiziert. Die Identifizierung der Pflanzenreihen 18 ist hierbei durch Einpassung von geradliniger Pflanzenreihenmittelpunktlinien 20 in Bildtrajektorien mit dem höchsten NDVI Wert (Differenz rot zu NIR) der Pflanzen 14 erfolgt.

Wie weiter aus Fig. 1 ersichtlich, wurde ein Kulturpflanzenbereich 22, welcher die Pflanzenreihen 18 umfasst, definiert. Der Kulturpflanzenbereich 22 umfasst hierbei Teilbereiche mit einer definierten konstanten Breite, welche jeweils symmetrisch um eine Pflanzenreihenmittelpunktlinie 20 verlaufen. Alle erfassten Pflanzen 12 in dem Kulturpflanzenbereich 22 werden zunächst per Definition als Kulturpflanzen 14 angesehen bzw. der Klasse "Kulturpflanzen" 14 zugeordnet.

Des Weiteren wurde ein Beikrautbereich 24 definiert, welcher verschieden von dem Kulturpflanzenbereich 22 ist und auch keine Überlappung zu diesem aufweist. Der Beikrautbereich 24 ist zwischen dem Kulturpflanzenbereich 22 bzw. den Teilbereichen des Kulturpflanzenbereiches 22 angeordnet und weist einen definierten Abstand zu diesem/diesen auf. Alle erfassten Pflanzen 12 in dem Beikrautbereich 24 werden per Definition als Beikräuter 16 angesehen bzw. der Klasse "Beikräuter" 16 zugeordnet.

Um nun Beikräuter 16 innerhalb der Pflanzenreihen 18 bzw. innerhalb des Kulturpflanzenbereiches 22 zu identifizieren, werden mittels der Recheneinheit gemäß der schematischen Darstellung aus Fig. 2 Merkmalswerte für Pflanzenmerkmale 26 der Pflanzen 16 bzw. Beikräuter 16 des Beikrautbereiches 24 in der Bildinformation ermittelt, um einen charakteristischen Merkmalswertebereich 28 von Pflanzen 16 bzw. Beikräutern 16 des Beikrautbereiches 24 zu erhalten. Die Pflanzenmerkmale 26 sind hierbei geometrische Merkmale der Beikräuter 16.

Im gezeigten Ausführungsbeispiel wurden aus Darstellungsgründen die Merkmalswerte von lediglich zwei Pflanzenmerkmalen 26 ermittelt. Wie einleitend erläutert, wird jeweils ein Merkmalswert je Pflanzenmerkmal 26 und je Beikraut 16 ermittelt. Die Merkmalwerte jedes Beikrauts 16 bilden einen Merkmalsvektor aus. Demnach erhält man für jedes Beikraut 16 einen Merkmalsvektor mit so vielen Einträgen, wie Pflanzenmerkmale 26 betrachtet werden. Jeder dieser Merkmalsvektoren bezeichnet einen Punkt in einem Merkmalsraum 30. Der Merkmalsraum 30 hat also so viele Dimensionen M1, M2 wie Pflanzenmerkmale 26 betrachtet werden. Die Punkte wiederum in dem Merkmalsraum 30 bilden den charakteristischen Merkmalswertebereich 28 bzw. das Cluster 28 / die Klasse 28 von Beikräutern 16 des Beikrautbereiches 24 aus.

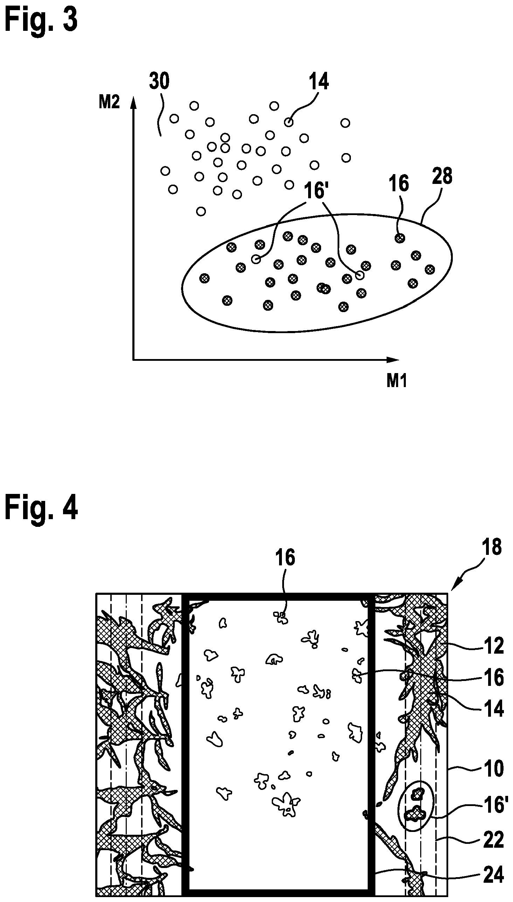

Analog hierzu werden mittels der Recheneinheit gemäß der schematischen Darstellung aus Fig. 3 auch Merkmalswerte für die Pflanzenmerkmale 26 der Pflanzen 14 des Kulturpflanzenbereiches 22 in der Bildinformation ermittelt.

Wie nun aus Fig. 3 ersichtlich, gibt es Pflanzen 16' in dem Kulturpflanzenbereich 18, welche zwar zunächst als Kulturpflanzen 14 angesehen wurden, jedoch Merkmalswerte aufweisen, die in den erhaltenen charakteristischen Merkmalswertebereich 28 von Pflanzen 16 bzw. Beikräutern 16 des Beikrautbereiches 24 fallen. Somit handelt es sich bei diesen identifizierten Pflanzen 16' um Beikräuter 16' innerhalb der definierten Pflanzenreihen 18 bzw. innerhalb des Kulturpflanzenbereiches 22, welche zunächst fälschlicherweise als Kulturpflanzen 14 angesehen wurden und nun mittels der Recheneinheit identifiziert wurden. Hierdurch können innerhalb der Pflanzenreihen 18 befindliche fehlklassifizierte Beikräuter 16' identifiziert und richtig klassifiziert werden.

Somit können mit vorgestellten Verfahren der identifizierten Pflanzen 16' bzw. Beikräuter 16' des Kulturpflanzenbereiches 22 mit Merkmalswerten, welche in den erhaltenen charakteristischen Merkmalswertebereich 28 von Pflanzen 16 bzw. Beikräutern 16 des Beikrautbereiches 24 fallen, zusammen mit allen Beikräutern 16 des Beikrautbereiches 24 in eine Beikrautklasse klassifiziert werden. Ferner können alle restlichen Pflanzen 14 des Kulturpflanzenbereiches 22 in eine von der eine Kulturpflanzenklasse klassifiziert werden.

In Fig. 4 ist die Bildinformation bzw. das Bild aus Fig. 1 mit einer Neuklassifizierung der identifizierten Pflanzen 16' in dem Kulturpflanzenbereich 22 dargestellt.

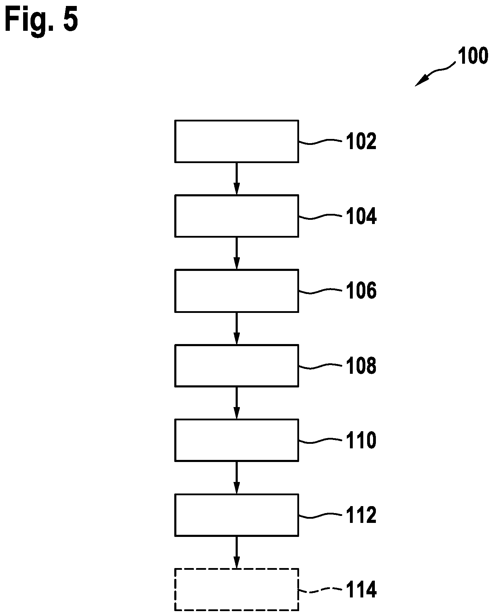

Fig. 5 zeigt ein Ablaufdiagramm eines Ausführungsbeispiels des hier vorgestellten Ansatzes als Verfahren 100 zum Identifizieren von Beikräutern () innerhalb einer definierten Pflanzenreihe (18) einer landwirtschaftlichen Fläche. Das Verfahren 100 umfasst einen Schritt des Empfangens 102 einer Bildinformation von einem mittels einer optischen Erfassungseinheit erfassten Feldabschnitt 10 einer landwirtschaftlichen Fläche mit Pflanzen 12. Das Verfahren umfasst ferner einen Schritt des Identifizierens 104 von zumindest einer Pflanzenreihe 18 in der Bildinformation mittels einer Recheneinheit. Das Verfahren umfasst außerdem einen Schritt des Definierens 106 eines die zumindest eine identifizierte Pflanzenreihe 18 umfassenden Kulturpflanzenbereiches 22 unter Verwendung der zumindest einen identifizierten Pflanzenreihe 18 und eines von dem Kulturpflanzenbereich 22 verschiedenen Beikrautbereiches 24 in der Bildinformation mittels der Recheneinheit. Das Verfahren umfasst des Weiteren einen Schritt des Ermittelns 108 von Merkmalswerten für Pflanzenmerkmale 26 von Pflanzen 16 des Beikrautbereiches in der Bildinformation mittels der Recheneinheit, um charakteristische Merkmalswertebereiche für Pflanzenmerkmale 26 von Pflanzen 16 des Beikrautbereiches 24 zu erhalten. Das Verfahren umfasst ferner einen Schritt des Ermittelns 110 von Merkmalswerten für die gleichen Pflanzenmerkmale 26 von Pflanzen 14 des Kulturpflanzenbereiches 22 in der Bildinformation mittels der Recheneinheit. Das Verfahren umfasst ferner einen Schritt des Identifizierens 112 der Pflanzen 16' des Kulturpflanzenbereiches 22 mit Merkmalswerten, welche in den erhaltenen charakteristischen Merkmalswertebereich 28 von Pflanzen 16 des Beikrautbereiches 24 fallen, um Beikräuter 16' innerhalb einer definierten Pflanzenreihe 18 zu identifizieren.

Das Verfahren umfasst auch einen optionalen Schritt des Klassifizierens 114 der identifizierten Pflanzen 16' des Kulturpflanzenbereiches 22 mit Merkmalswerten, welche in den charakteristischen Merkmalswertebereich 28 fallen, in eine erste Pflanzenklasse, insbesondere eine Beikrautklasse mittels der Recheneinheit. Hierbei werden im Schritt des Klassifizierens 114 ferner alle Pflanzen 16 des Beikrautbereiches 24 ebenfalls in die erste Pflanzenklasse, insbesondere die Beikrautklasse und alle restlichen Pflanzen 14 des Kulturpflanzenbereiches 22 in eine von der ersten Pflanzenklasse verschiedene zweite Pflanzenklasse, insbesondere eine Kulturpflanzenklasse klassifiziert.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zum Identifizieren von Beikräutern (16') innerhalb einer definierten Pflanzenreihe (18) einer landwirtschaftlichen Fläche, mit den Schritten:
- Empfangen (102) einer Bildinformation von einem mittels einer optischen Erfassungseinheit erfassten Feldabschnitt (10) einer landwirtschaftlichen Fläche mit Pflanzen (12);
- Identifizieren (104) von zumindest einer Pflanzenreihe (18) in der Bildinformation mittels einer Recheneinheit;
- Definieren (106) eines die zumindest eine identifizierte Pflanzenreihe (18) umfassenden Kulturpflanzenbereiches (22) unter Verwendung der zumindest einen identifizierten Pflanzenreihe (18) und eines von dem Kulturpflanzenbereich (22) verschiedenen Beikrautbereiches (24) in der Bildinformation mittels der Recheneinheit;
- Ermitteln (108) von Merkmalswerten für Pflanzenmerkmale (26) von Pflanzen (16) des Beikrautbereiches (24) in der Bildinformation mittels der Recheneinheit, um einen charakteristischen Merkmalswertebereich (28) von Pflanzen (16) des Beikrautbereiches (24) zu erhalten;
- Ermitteln (110) von Merkmalswerten für die gleichen Pflanzenmerkmale (26) von Pflanzen (14) des Kulturpflanzenbereiches (22) in der Bildinformation mittels der Recheneinheit; und
- Identifizieren (112) der Pflanzen (16') des Kulturpflanzenbereiches (22) mit Merkmalswerten, welche in den erhaltenen charakteristischen Merkmalswertebereich (28) von Pflanzen (16) des Beikrautbereiches fallen, um Beikräuter (16') innerhalb einer definierten Pflanzenreihe (18) zu identifizieren.

2. Verfahren (100) nach Anspruch 1, **gekennzeichnet durch** einen Schritt des Klassifizierens (114) der identifizierten Pflanzen (16') des Kulturpflanzenbereiches (22) mit Merkmalswerten, welche in den erhaltenen charakteristischen Merkmalswertebereich (28) von Pflanzen (16) des Beikrautbereiches (24) fallen, in eine erste Pflanzenklasse, insbesondere eine Beikrautklasse mittels der Recheneinheit.

3. Verfahren (100) nach Anspruch 2, **dadurch gekennzeichnet, dass** im Schritt des Klassifizierens (114) ferner alle Pflanzen (16) des Beikrautbereiches (24) in die erste Pflanzenklasse, insbesondere die Beikrautklasse klassifiziert werden.

4. Verfahren (100) nach Anspruch 2 oder 3, **dadurch gekennzeichnet, dass** im Schritt des Klassifizierens (114) alle restlichen Pflanzen (14) des Kulturpflanzenbereiches (22) in eine von der ersten Pflanzenklasse verschiedene zweite Pflanzenklasse, insbesondere eine Kulturpflanzenklasse klassifiziert werden.

5. Verfahren (100) nach einem der vorhergehenden Ansprüche, **dadurch gekennzeichnet, dass** das Identifizieren (104) der zumindest einen Pflanzenreihe (18) unter Berücksichtigung zuvor identifizierter Pflanzen (16') des Kulturpflanzenbereiches (22) mit Merkmalswerten, welche den erhaltenen charakteristischen Merkmalswertebereich (28) von Pflanzen (16) des Beikrautbereiches fallen, erfolgt.

6. Verfahren (100) nach einem der vorhergehenden Ansprüche, **dadurch gekennzeichnet, dass** das Identifizieren (104) der zumindest einen Pflanzenreihe (18) unter Verwendung zumindest einer der folgenden Informationen erfolgt: Farbanteil, insbesondere roter Farbanteil von Pflanzen (12) des erfassten Feldabschnitts (10), Infrarotanteil von Pflanzen (12) des erfassten Feldabschnitts (10), Pflanzenabstand, Pflanzreihenabstand, Wachstumsstadium der Pflanzen (12), Geokoordinaten einer Aussaat der Pflanzen (12).

7. Verfahren (100) nach einem der vorhergehenden Ansprüche, **dadurch gekennzeichnet, dass** in dem Schritt des Identifizierens (104) der zumindest einen Pflanzenreihe (18) alle Pflanzenreihen (18) in der Bildinformation identifiziert werden.

8. Verfahren (100) nach einem der vorhergehenden Ansprüche, **dadurch gekennzeichnet, dass** die Pflanzenmerkmale (26) geometrische Merkmale der Pflanzen (12) sind und insbesondere unter Verwendung invarianter Momente ermittelt werden.

9. Verfahren (100) zum Ansteuern einer landwirtschaftlichen Arbeitsmaschine, insbesondere eines landwirtschaftlichen Arbeitswerkzeugs einer landwirtschaftlichen Arbeitsmaschine, in Abhängigkeit von identifizierten Beikräutern (16') in einem Kulturpflanzenbereiches (22) mit Merkmalswerten, welche in den erhaltenen charakteristischen Merkmalswertebereich (28) von Pflanzen (16) des Beikrautbereiches fallen, wobei die Beikräuter (16') nach einem Verfahren nach einem der vorherigen Ansprüche identifiziert werden.

10. Recheneinheit, welche eingerichtet ist, die Schritte eines Verfahrens (100) nach einem der vorhergehenden Ansprüche durchzuführen und/oder zu steuern.

11. Pflanzenidentifizierungseinheit mit einer optischen Erfassungseinheit zum Erfassen eines Feldabschnitts (10) einer landwirtschaftlichen Fläche mit Pflanzen (12), um eine Bildinformation von dem erfassten Feldabschnitt (10) zu erhalten, und einer Recheneinheit nach Anspruch 10.

12. Landwirtschaftliche Arbeitsmaschine mit einem landwirtschaftlichen Arbeitswerkzeug und einer Pflanzenidentifizierungseinheit nach Anspruch 11, wobei das Arbeitswerkzeug in Abhängigkeit von den identifizierten Pflanzen (16') des Kulturpflanzenbereiches (22) mit Merkmalswerten, welche in den erhaltenen charakteristischen Merkmalswertebereich (28) von Pflanzen (16) des Beikrautbereiches (24) fallen, angesteuert wird.

13. Computerprogramm, das dazu eingerichtet ist, die Schritte eines Verfahrens (100) nach einem der Ansprüche 1 bis 9 durchzuführen und/oder zu steuern.

14. Maschinenlesbares Speichermedium, auf dem das Computerprogramm nach Anspruch 13 gespeichert ist.

## Claims

1. Method (100) for identifying weeds (16') within a defined row of plants (18) in an agricultural area, including the steps of:
- receiving (102) image information about a field portion (10) of an agricultural area with plants (12), captured by means of an optical capturing unit;
- identifying (104) at least one row of plants (18) in the image information by means of a computing unit;
- defining (106) a cultivated plant region (22) comprising the at least one identified row of plants (18) using the at least one identified row of plants (18), and a weed region (24) which differs from the cultivated plant region (22) in the image information by means of the computing unit;
- determining (108) feature values for plant features (26) of plants (16) of the weed region (24) in the image information by means of the computing unit in order to obtain a characteristic feature value range (28) of plants (16) of the weed region (24);
- determining (110) feature values for the same plant features (26) of plants (14) of the cultivated plant region (22) in the image information by means of the computing unit; and
- identifying (112) the plants (16') of the cultivated plant region (22) having feature values that fall in the obtained characteristic feature value range (28) of plants (16) of the weed region in order to identify weeds (16') within a defined row of plants (18).

2. Method (100) according to Claim 1, **characterized by** a step of classifying (114) the identified plants (16') of the cultivated plant region (22) having feature values that fall in the obtained characteristic feature value range (28) of plants (16) of the weed region (24) into a first plant class, in particular a weed class, by means of the computing unit.

3. Method (100) according to Claim 2, **characterized in that** furthermore all plants (16) of the weed region (24) are classified into the first plant class, in particular the weed class, within the classification step (114).

4. Method (100) according to Claim 2 or 3, **characterized in that** all remaining plants (14) of the cultivated plant region (22) are classified into a second plant class that differs from the first plant class, in particular a cultivated plant class, within the classification step (114).

5. Method (100) according to any one of the preceding claims, **characterized in that** the identification (104) of the at least one row of plants (18) is implemented taking account of previously identified plants (16') of the cultivated plant region (22) having feature values that fall in the obtained characteristic feature value range (28) of plants (16) of the weed region.

6. Method (100) according to any one of the preceding claims, **characterized in that** the identification (104) of the at least one row of plants (18) is implemented using at least one of the following information items: colour component, in particular red colour component, of plants (12) of the captured field portion (10), infrared component of plants (12) of the captured field portion (10), distance between plants, distance between rows of plants, stage of plant (12) growth, geo-coordinates of plant (12) seeds.

7. Method (100) according to any one of the preceding claims, **characterized in that** all rows of plants (18) in the image information are identified within the step of identifying (104) the at least one row of plants (18).

8. Method (100) according to any one of the preceding claims, **characterized in that** the plant features (26) are geometric features of the plants (12) and are determined using invariant moments in particular.

9. Method (100) for controlling an agricultural work machine, in particular an agricultural working tool of an agricultural work machine, on the basis of identified weeds (16') in a cultivated plant region (22) having feature values that fall in the obtained characteristic feature value range (28) of plants (16) of the weed region, the weeds (16') having been identified according to a method according to any one of the preceding claims.

10. Computing unit configured to carry out and/or to control the steps of a method (100) according to any one of the preceding claims.

11. Plant identification unit comprising an optical capturing unit for capturing a field portion (10) of an agricultural area with plants (12) in order to obtain an image information item about the captured field portion (10), and comprising a computing unit according to Claim 10.

12. Agricultural work machine comprising an agricultural working tool and a plant identification unit according to Claim 11, wherein the working tool is controlled on the basis of the identified plants (16') of the cultivated plant region (22) having feature values that fall in the obtained characteristic feature value range (28) of plants (16) of the weed region (24).

13. Computer program configured to carry out and/or to control the steps of a method (100) according to any one of Claims 1 to 9.

14. Machine-readable storage medium, on which the computer program according to Claim 13 is stored.

## Revendications

1. Procédé (100) d'identification de mauvaises herbes (16') dans un rang de plantes défini (18) d'une surface agricole, comprenant les étapes suivantes :
- la réception (102) d'une information d'image d'une section de champ (10), détectée au moyen d'une unité de détection optique, d'une surface agricole comprenant des plantes (12) ;
- l'identification (104) d'au moins un rang de plantes (18) dans l'information d'image au moyen d'une unité de calcul ;
- la définition (106) d'une zone de plantes de culture (22) comprenant l'au moins un rang de plantes identifié (18) en utilisant l'au moins un rang de plantes identifié (18) et une zone de mauvaises herbes (24) différente de la zone de plantes de culture (22) dans l'information d'image au moyen de l'unité de calcul ;
- la détermination (108) de valeurs de particularités pour des particularités végétales (26) de plantes (16) de la zone de mauvaises herbes (24) dans l'information d'image au moyen de l'unité de calcul, afin d'obtenir une plage de valeurs de particularités caractéristique (28) de plantes (16) de la zone de mauvaises herbes (24) ;
- la détermination (110) de valeurs de particularités pour les mêmes particularités végétales (26) de plantes (14) de la zone de plantes de culture (22) dans l'information d'image au moyen de l'unité de calcul ; et
- l'identification (112) des plantes (16') de la zone de plantes de culture (22) ayant des valeurs de particularités qui se situent dans la plage de valeurs de particularités caractéristique obtenue (28) de plantes (16) de la zone de mauvaises herbes, afin d'identifier des mauvaises herbes (16') dans un rang de plantes défini (18).

2. Procédé (100) selon la revendication 1, **caractérisé par** une étape de classification (114) des plantes identifiées (16') de la zone de plantes de culture (22) ayant des valeurs de particularités qui se situent dans la plage de valeurs de particularités caractéristique obtenue (28) de plantes (16) de la zone de mauvaises herbes (24) dans une première classe de plantes, notamment une classe de mauvaises herbes, au moyen de l'unité de calcul.

3. Procédé (100) selon la revendication 2, **caractérisé en ce que,** dans l'étape de classification (114), toutes les plantes (16) de la zone de mauvaises herbes (24) sont en outre classées dans la première classe de plantes, notamment la classe de mauvaises herbes.

4. Procédé (100) selon la revendication 2 ou 3, **caractérisé en ce que,** dans l'étape de classification (114), toutes les plantes restantes (14) de la zone de plantes de culture (22) sont classées dans une deuxième classe de plantes différente de la première classe de plantes, notamment une classe de plantes de culture.

5. Procédé (100) selon l'une quelconque des revendications précédentes, **caractérisé en ce que** l'identification (104) de l'au moins un rang de plantes (18) s'effectue en tenant compte de plantes (16') de la zone de plantes de culture (22) identifiées précédemment, ayant des valeurs de particularités qui se situent dans la plage de valeurs de particularités caractéristique obtenue (28) de plantes (16) de la zone de mauvaises herbes.

6. Procédé (100) selon l'une quelconque des revendications précédentes, **caractérisé en ce que** l'identification (104) de l'au moins un rang de plantes (18) est effectuée en utilisant au moins l'une des informations suivantes : proportion de couleur, notamment proportion de couleur rouge de plantes (12) de la section de champ détectée (10), proportion d'infrarouge de plantes (12) de la section de champ détectée (10), distance entre plantes, distance entre rangs de plantes, stade de croissance des plantes (12), coordonnées géographiques d'un semis des plantes (12).

7. Procédé (100) selon l'une quelconque des revendications précédentes, **caractérisé en ce que,** dans l'étape d'identification (104) de l'au moins un rang de plantes (18), tous les rangs de plantes (18) dans l'information d'image sont identifiés.

8. Procédé (100) selon l'une quelconque des revendications précédentes, **caractérisé en ce que** les particularités végétales (26) sont des particularités géométriques des plantes (12) et sont notamment déterminées en utilisant des moments invariants.

9. Procédé (100) de commande d'une machine de travail agricole, notamment d'un outil de travail agricole d'une machine de travail agricole, en fonction de mauvaises herbes (16') identifiées dans une zone de plantes de culture (22) ayant des valeurs de particularités qui se situent dans la plage de valeurs de particularités caractéristique obtenue (28) de plantes (16) de la zone de mauvaises herbes, les mauvaises herbes (16') étant identifiées selon un procédé selon l'une quelconque des revendications précédentes.

10. Unité de calcul, qui est conçue pour réaliser et/ou commander les étapes d'un procédé (100) selon l'une quelconque des revendications précédentes.

11. Unité d'identification de plantes comprenant une unité de détection optique pour détecter une section de champ (10) d'une surface agricole comprenant des plantes (12), afin d'obtenir une information d'image de la section de champ détectée (10), et une unité de calcul selon la revendication 10.

12. Machine de travail agricole comprenant un outil de travail agricole et une unité d'identification de plantes selon la revendication 11, dans laquelle l'outil de travail est commandé en fonction des plantes identifiées (16') de la zone de plantes de culture (22) ayant des valeurs de particularités qui se situent dans la plage de valeurs de particularités caractéristique obtenue (28) de plantes (16) de la zone de mauvaises herbes (24).

13. Programme informatique, qui est conçu pour réaliser et/ou commander les étapes d'un procédé (100) selon l'une quelconque des revendications 1 à 9.

14. Support d'enregistrement lisible par machine, sur lequel est enregistré le programme informatique selon la revendication 13.
